# EUROPEAN PATENT APPLICATION

(11) **EP 3 021 239 A2**
(43) Date of publication of application: **18.05.2016**
(21) Application number: 15194788.4
(22) Date of filing: 16.11.2015
(51) Int. Cl.: G06F 17/30

(54) **DISPLAY APPARATUS AND METHOD FOR SUMMARIZING OF DOCUMENT**

(30) Priority: 17.11.2014 KR 20140160273
(71) Applicant: Samsung Electronics Co., Ltd., Gyeonggi-do 16677 (KR)
(72) Inventor: PARK, Kyung-su, Gyeonggi-do (KR); JO, Eun-kyoung, Seoul (KR); RYU, Hee-seob, Gyeonggi-do (KR); LEE, Dong-jin, Gyeonggi-do (KR)
(74) Representative: Taor, Simon Edward William

(57) **Abstract**

A display apparatus including a communicator configured to perform data communication with a content server and to receive at least one of a main document and a sub document related to the main document; a document analyzer configured to extract a keyword having a high frequency of occurrence from the main document and to determine a head keyword for generating a summarized document from the extracted keyword with reference to the received sub document; and a processor configured to determine a reliability of each sentence of the main document based on the head keyword, extract a sentence that matches a predetermined condition with reference to the determined reliability, and analyze a structural format of the extracted sentence so as to re-configure a word that forms the sentence and generate a summarized sentence, thereby generating a summarized document where information and logical cohesion have been obtained.

## Description

Apparatuses and methods relate to a display apparatus and method for summarizing a document, and more particularly, to a display apparatus for summarizing a document of a text format and a method thereof.

Generally, there are three methods for summarizing a document having a text format: a summarizing method that is based on rules, a statistical summarizing method, and a hybrid summarizing method wherein the rule based method and the statistical method are combined.

The rule based summarizing method applies a relatively small number of rules repeatedly and parses a document. However, such a rule based summarizing method not only has limitations in processing ambiguity, but it also has a problem with the complexity of analyzing increasing due to increasing ambiguity.

The statistical summarizing method is a method of statistically modeling the correlations of words and combination relationships between constructions in a document to be summarized. Such a statistical summarizing method may resolve the problem of ambiguity that occurs in the rule based summarizing method, but the accuracy of resolving the ambiguity may deteriorate due to lack of learning data for extracting statistical information. Not only that, but such a statistical summarizing method also has a problem in that the speed of analyzing the document significantly deteriorates due to searching in a massive statistical parameter space.

The hybrid summarizing method is a method for complementing disadvantages of the rule based summarizing method and the statistical summarizing method by combining the rule based summarizing method and the statistical summarizing method. However, such a hybrid summarizing method is performed only in the form of abbreviating a document.

Therefore, such a conventional document summarizing method has a problem that it cannot summarize a document such that head information of the document and additional information where the writer's intentions are reflected cannot be reflected cohesively.

Exemplary embodiments overcome the above disadvantages and other disadvantages not described above. Also, the embodiments are not required to overcome the disadvantages described above, and an exemplary embodiment may not overcome any of the problems described above.

Various embodiments of the present disclosure are directed to enabling summarizing a document in consideration of a plurality of documents.

Furthermore, various embodiments of the present disclosure are directed to generate a summarized document of which information and logical cohesion have been generated through discourse analysis.

Furthermore, various embodiments of the present disclosure are directed to generate a summarized document complexly consisting of objective information and subjective information.

According to an embodiment of the present disclosure, there is provided a display apparatus including a communicator configured to perform data communication with a content server and to receive at least one of a main document and a sub document related to the main document; a document analyzer configured to extract a keyword having a high frequency of occurrence from the main document, and to determine a head keyword for generating a summarized document from the extracted keyword with reference to the received sub document; and a processor configured to determine a reliability of each sentence of the main document based on the head keyword, extract a sentence that matches a predetermined condition with reference to the determined reliability, and analyze a structural format of the extracted sentence so as to re-configure a word that forms the sentence and generate a summarized sentence.

The processor may compute a reliability value from a distribution chart of the head keyword of each sentence of the main document, compare the computed reliability value with a predetermined threshold value, and extract a sentence having a reliability value of or above the predetermined threshold value as a sentence for generating a summarized sentence.

In response to there being a plurality of extracted sentences, the processor may obtain a theme paragraph that is a head theme in the main document through discourse analysis, and extract a sentence included in the obtained theme paragraph of among the plurality of extracted sentences as a sentence for generating a summarized sentence.

The processor may analyze a structure of the extracted sentence through syntax analysis, extract a word forming a head sentence of among a plurality of words forming the sentence, and generate a summarized sentence based on the extracted word.

The processor may analyze a disclosed relationship between the extracted words and generate a summarized sentence based on remaining words excluding at least one word having a same meaning.

The display apparatus may further include a display configured to display the summarized sentence; and the processor may generate a summarized document using at least one sentence including a keyword related to a pre-registered subjective semantic element of among a plurality of sentences included in the obtained theme paragraph and the summarized sentence, and display the generated summarized document through the display, and the subjective semantic element may be an element related at least one of an evaluation, sentiment and opinion of a user regarding the main document.

In response to the main document being a document oriented around an object, the document analyzer may determine the keyword extracted from the main document as a head keyword, and in response to the main document being a document centered around an event relationship, the document analyzer may determine a head keyword with reference to the sub document.

In response to the main document being a document centered around an event relationship, the document analyzer may analyze a title of each of a plurality of sub documents and determine a head keyword with reference to a sub document having a title of a document including the extracted keyword.

According to another embodiment of the present disclosure, there is provided a method for summarizing a document in a display apparatus, the method including extracting a keyword having a high frequency of occurrence from a main document; determining a head keyword for generating a summarized sentence from the extracted keyword with reference to at least one sub document; determining a reliability of each sentence of the main document based on the head keyword, and extracting a sentence matching a predetermined condition with reference to the determined reliability; and analyzing a structural format of the extracted sentence, re-configuring a word that forms the sentence, and generating a summarized sentence.

The extracting may involve computing a reliability value from a distribution chart of the head keyword of each sentence of the main document, comparing the computed reliability value and a predetermined threshold value, and extracting a sentence having a reliability value of or above the predetermined threshold value as a sentence for generating a summarized sentence.

The extracting a sentence for generating a summarized sentence may involve, in response to there being a plurality of extracted sentences, obtaining a theme paragraph that is a head theme in the main document through discourse analysis, and extracting a sentence included in the obtained theme paragraph of among the plurality of extracted sentences as a sentence for generating a summarized sentence.

The generating a summarized sentence may involve analyzing a structural format of the extracted sentence through syntax analysis, extracting a word forming a head sentence of among a plurality of words forming the sentence, and generating a summarized sentence based on the extracted word.

The generating a summarized sentence may involve analyzing a disclosed relationship between the extracted words and generating a summarized sentence based on remaining words excluding at least one word having a same meaning.

The generating a summarized document may further include generating a summarized document using at least one sentence including a keyword related to a pre-registered subjective semantic element of among a plurality of sentences included in the obtained theme paragraph and the summarized sentence, and the subjective semantic element may be an element related to at least one of an evaluation, sentiment and opinion of a user regarding the main document.

The method may further include analyzing the extracted keyword and determining document characteristics, wherein the determining a head keyword may involve, in response to the main document being a document centered around an object, determining a keyword extracted in the main document as a head keyword, and in response to the main document being a document centered around an event relationship, determining a head keyword with reference to the sub document.

The determining the head keyword may involve, in response to the main document being a document centered around an event relationship, analyzing a title of each of a plurality of sub documents and determining a head keyword with reference to a sub document having a title of a document including the extracted keyword.

According to another embodiment of the present disclosure, there is provided a computer program combined with a display apparatus and stored in a record medium to execute the following operations and provides summarization of a document, the operations including extracting a keyword having a high frequency of occurrence from a main document; determining a head keyword for generating a summarized sentence from the extracted keyword with reference to at least one sub document; determining a reliability of each sentence of the main document based on the head keyword, and extracting a sentence matching a predetermined condition with reference to the determined reliability; and analyzing a structural format of the extracted sentence, re-configuring a word forming the sentence, and generating a summarized sentence.

According to another embodiment of the present disclosure, there is provided a display apparatus including a memory and a processor coupled to the memory and configured to extract a keyword that occurs frequently in a main document and determine a head keyword for generating a summarized document from the extracted keyword with reference to a sub document, determine a reliability of each sentence of the main document based on the head keyword, extract a sentence with a reliability that meets a predetermined condition, and analyze a structural format of the extracted sentence so as to re-configure a word of the sentence and generate a summarized sentence.

According to the aforementioned various embodiments of the present disclosure, the display apparatus may perform document summarization taking into account a plurality of documents, thereby generating a summarized document where information and logical cohesion have been obtained. Furthermore, the display apparatus according to the present disclosure may generate a summarized document consisting of objective information and subjective information on the document, thereby providing semantic meaning intended by the writer of the document.

The above and/or other aspects will be more apparent by describing certain exemplary embodiments with reference to the accompanying drawings, in which:
FIG. 1 is a block diagram of a display apparatus according to an embodiment of the present disclosure;
FIG. 2 is an exemplary view of a main document according to an embodiment of the present disclosure;
FIG. 3 is an exemplary view of generating a summarized sentence in order to generate a summarized document according to an embodiment of the present disclosure;
FIG. 5 is an exemplary view of providing a menu UI for generating a different summarized document in a display apparatus according to an embodiment of the present disclosure;
FIG. 6 is an exemplary view of a head summarized document generated according to a first summarization level in a display apparatus according to an embodiment of the present disclosure;
FIG. 7 is an exemplary view of a general summarized document generated according to a second summarization level in a display apparatus according to an embodiment of the present disclosure;
FIG. 8 is an exemplary view of an expanded summarized document generated according to a third summarization level in a display apparatus according to an embodiment of the present disclosure;
FIG. 9 is a flowchart of a method for generating a summarized document in a display apparatus according to an embodiment of the present disclosure; and
FIG. 10 is an exemplary view of extracting a head sentence for generating a summarized document in a display apparatus according to the present disclosure.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the embodiments. Thus, it is apparent that the exemplary embodiments can be carried out without those specifically defined matters. Also, well-known functions or constructions are not described in detail since they would obscure the embodiments with unnecessary detail.

The terms "first", "second", etc. may be used to describe diverse components, but the components are not limited by the terms. The terms are only used to distinguish one component from the others.

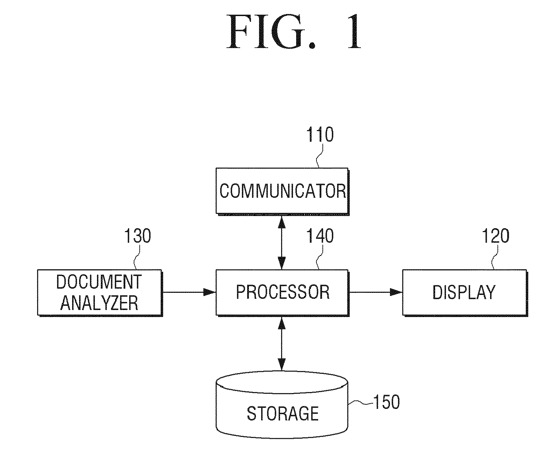

FIG. 1 is a block diagram of a display apparatus according to an embodiment of the present disclosure.

As illustrated in FIG. 1, the display apparatus may be for example any one of terminal apparatuses that provide text contents such as a tablet PC and eBook device and the like. Such a display apparatus includes a communicator 110, display 120, document analyzer 130, processor 140, and storage 150.

The communicator 110 performs data communication with a contents server (not illustrated) that provides contents, and receives at least one of a content related to a main document and a content related to a sub document related to the main document. Such a communicator 110 may include various communication modules such as a short distance wireless communication module (not illustrated), wireless communication module (not illustrated) and the like. Herein, the short distance wireless communication module (not illustrated) is a communication module that performs wireless communication with a discourse type server 200 located within a short distance and an external server (not illustrated) that provides contents, for example Bluetooth, Zigbee and the like. The wireless communication module (not illustrated) is a module configured to be connected to an external network and to perform communication according to a wireless communication protocol such as Wifi, IEEE and the like. The communicator 110 may further include mobile communication modules such as a 3G (3rd Generation), 3GPP (3rd Generation Partnership Project), and LTE (Long Term Evolution) configured to be connected to a mobile communication network and to perform communication.

The display 120 displays a content related to a web document received from a content server (not illustrated) or a content related to a document pre-stored in the storage 150, at a user's request. Herein, the web document or pre-stored document may be a document of a text format. Hereinafter, a content related to a document being displayed on a screen through the display 120 will be referred to as a main document. The processor 140 controls overall operations of the display apparatus using various programs pre-stored in the storage 150. Especially, the processor 140 performs summarization of the main document displayed through the display 120 at a user's command. Specifically, the processor may copy a program related to analyzing the document pre-stored in the storage 150 in a RAM, and perform summarization of the main document using the program related to analyzing the document copied in the RAM.

Meanwhile, in general, the processor 140 is a configuration for controlling an apparatus. The processor may be substituted to a microprocessor, controller and the like, and may be realized as a system-on-a-chip or system on chip (SOC, SoC) with another function unit such as a document analyzer 130, communicator 110 and the like.

The document analyzer 130 extracts a plurality of keywords having high frequencies of occurrence from the main document displayed on the screen using the program related to analyzing the document copied in the RAM (not illustrated). Furthermore, the document analyzer 130 determines a head keyword for generating a summarized document from the plurality of keywords pre-extracted from the main document with reference to at least one sub document received through the communicator 110. Herein, the sub document may be a document that includes contents related to an issue related to an issue in the main document.

In response to such a head keyword being determined, the processor 140 determines a reliability of each sentence of the main document based on the head keyword extracted through the document analyzer 130. Then, the processor 140 extracts a sentence corresponding to a pre-determined condition with reference to the pre-determined reliability, analyzes a structural format of the extracted sentence, re-configures a word that forms the sentence and generates a summarized sentence.

Specifically, the document analyzer 130 extracts a word for each sentence from the main document, and extracts a word that occurs for, or more than, a predetermined number of times as a keyword with a high frequency of occurrence. In response to such a keyword being extracted, the processor 140 analyzes the extracted keyword, and identifies document characteristics to determine whether to generate a summarized document in the main document or to generate a summarized document with reference to at least one sub document. In an embodiment, the processor 140 may analyze the extracted keyword, and determine whether the main document is a document related to an object such as a person, place and title of workpiece, or a document centered around an event relationship to determine whether or not to refer to the sub document.

In response to the main document being determined as a document centered around an object, the document analyzer 130 determines a plurality of keywords extracted as having high frequencies of occurrence on the main sentence as a head keyword.

Meanwhile, in response to the main document being determined as a document centered around an object, the document analyzer 130 may analyze contents of the plurality of sub documents provided by the content server (not illustrated) and determine a sub document that includes at least one keyword of among a plurality of pre-extracted keywords as the document related to the main document. However, there is no limitation thereto, and the document analyzer 130 may analyze titles of the plurality of sub documents provided from the content server (not illustrated) and determine a sub document having a title of a document including at least one keyword of among a plurality of pre-extracted keywords as a document related to the main document.

However, in response to a sub document related to the main document being determined, the document analyzer 130 may determine a head keyword from the plurality of pre-extracted keywords based on the sub document determined as being related to the main document. In an embodiment, the document analyzer 130 extracts a word for each sentence on the sub document related to the main document, and extracts a word that occurs for, or more than, a predetermined number of times of among the extracted words as a keyword having a high frequency of occurrence. In response to such a keyword being extracted, the document analyzer 130 may determine a common keyword of among a keyword extracted from the main document and a keyword extracted from the sub document as a head keyword of the main document.

In response to such a head keyword being determined in the above embodiment, the processor 140 extracts a sentence including at least one head keyword of among each sentence in the main document. Then, the processor 140 may compute a reliability value from a distribution chart of head keywords extracted per sentence. Herein, the reliability value may be a value determined in proportionate to a number of head keywords per sentence. Therefore, the processor 140 may compare a reliability value computed per sentence and a predetermined threshold value, so as to extract a sentence having a reliability value of or above the predetermined threshold value as a head sentence for generating a summarized sentence.

However, there is no limitation thereto, and in response to a sentence including a head keyword being extracted, the processor 140 may extract a sentence having a predetermined number of head keywords or more as a head sentence for generating a summarized document.

In response to a plurality of head sentences for generating a summarized document being extracted through the various embodiments, the processor 140 may analyze a structure of the main document through discourse analysis and figure out characteristics of each paragraph of the document such as coherence, cohesion, intension, easiness, information, circumstance, and mutual text and the like, and from a result of the analysis, obtain a main paragraph that becomes a head theme in the main document from the result. More specifically, the processor 140 may obtain the main paragraph that becomes the head theme in consideration of a relationship between sentences and sentence types in the main document through discourse analysis. In general, in the case of a document consisting of paragraphs configured in a deductive method, the main paragraph may be a paragraph corresponding to the introduction, and in the case of a document consisting of paragraphs configured in an inductive method, the main paragraph may be a paragraph corresponding to the conclusion. Therefore, the processor 140 may analyze the configuration method of the main document through such discourse analysis, and obtain the main paragraph based on that configuration method. In response to the main paragraph being determined from the main document through such analysis, the processor 140 may analyze a structural format of the head sentence included in the main paragraph that is the head theme of among the head sentences for generating a summarized document, re-configure words in the head sentence and generate the summarized sentence.

In an embodiment, the processor 140 may generate a sentence extracted as the head sentence as a summarized sentence through syntax analysis.

More specifically, in response to the head sentence for generating a summarized document being determined, the processor 140 may analyze a structural format of the head sentence through syntax analysis, re-configure a word of a basic unit that forms the head sentence, and generate a summarized sentence.

In another embodiment, in response to the head sentence for generating a summarized document being determined, the processor 140 may analyze the structural format of the head sentence through syntax analysis, and extract a word of a basic unit that forms the head sentence. Then, the processor 140 may analyze whether or not the extracted words are related to each other when disclosed, and generate a summarized sentence based on remaining words besides at least one word having a same meaning.

For example, from the main document, a head sentence "Rockwell International Corp.'s Tulsa unit said it signed a tentative agreement extending its contract with Boeing Co. to provide structural parts for Boeing's 747 jetliners." may be extracted.

In response to such a head sentence being extracted, the processor 140 configures a text of a pre-extracted head sentence into a syntax analysis tree using a data processing linguistic grammar algorithm such as CFG(context Free Grammar), DG(Dependency Grammar), PSG(Probabilistic Phrase Structure Grammar), HPSG(Head Driven Phrase Structure Grammar), and LFG(Lexical Functional Grammar).

The head sentence "Rockwell International Corp.'s Tulsa unit said it signed a tentative agreement extending its contract with Boeing Co. to provide structural parts for Boeing's 747 jetliners." may be configured as a syntax analysis tree as shown below. (TOP

```
 (S
      (NP (NNP Rockwell_NNP) (NNP International_NNP) (NNP Corp._NNP) (.
      's_POS) (NNP Tulsa_NNP) (NNP unit_NN))
      (VP (VBD said_VBD)
              (S
                     (NP (PRP it_PRP))
                     (VP (VB signed_VBD)
                             (NP (DT a_DT) (NN tentative_JJ) (NN agreement_NN)
                                    (NN extending_VBG))
                                            (PP (IN its_PRP$) (NP (NP (NN
                                            contract_NN))
                             (PP (IN with_IN)
                                    (NP
                                            (NP (NNP Boeing_NNP) (NNP Co._NNP)
                                            (VP to_TO) (NN provide_VB) (NN
                                            structural_JJ) (NNS parts_NNS))
                                            (PP (IN for_IN)
                                                   (NP (NNP Boeing_NNP) (NNPS
                                                   's_POS) (NNP 747_CD) (NNS jetliners_NNS))
                                            )
                                    )
                             )
                             )
                     )
                     )
              )
      )
      (.._.)
      )
      )
```

Then, the processor 140 removes remaining nodes other than a head word node corresponding to an upper NP, VP and VP from the syntax analysis tree where the pre-extracted head sentence have been configured. That is, the processor may remove a lower NP, VP, PP and VBG node located below the upper NP, VP and VP node, leaving the head word node corresponding to the upper NP, VP and VP node. In such a method, a syntax analysis tree with only the head word node as shown below may be generated.

```
 (TOP
 (S
      (NP (NNP Rockwell_NNP) (NNP International_NNP) (NNP Corp._NNP) (.
      's_POS) (NNP Tulsa_NNP) (NNP unit_NN))
      (VP (VBD said_VBD)
              (S
                     (NP (PRP it_PRP))
                     (VP (VB signed_VBD)
                             (NP (DT a_DT) (NN tentative_JJ) (NN agreement_NN)
                             (PP (IN with_IN)
                                    (NP
                                            (NP (NNP Boeing_NNP) (NNP Co._NNP)
                                    )
                             )
                             )
                     )
                     )
              )
      )
      (.._.)
      )
      )
```

Through such a syntax analysis tree, head word nodes such as "Rockwell International Corp's Tulsa unit", "said", "it", "signed", "a tentative agreement" and "with Boeing Co." may be determined. Therefore, the processor 140 may generate a summarized sentence regarding a pre-extracted head sentence using a word corresponding to the head word node.

Meanwhile, in response to the head word node related to the summarized sentence being determined through the aforementioned example, the processor 140 matches a pronoun with an object name using a disclosed rule by a discourse analysis method. The disclosed rule by the discourse analysis method is a rule learned utilizing a cognitive and empirical rule, and through the disclosed rule, the processor 140 may match the object name "Rockwell International Corp's Tulsa unit" to the pronoun "it". By such a relationship matching disclosed, the pronoun "it" may be converted into the object name "Rockwell International Corp's Tulsa unit". After the matching, the processor 140 may remove "Rockwell International Corp's Tulsa unit" that is a surplus object node being repeated and a surplus predicate node "said" from the head word node, and generate a summarized sentence regarding the head sentence based on the remaining head word nodes.

That is, the head sentence "Rockwell International Corp.'s Tulsa unit said it signed a tentative agreement extending its contract with Boeing Co. to provide structural parts for Boeing's 747 jetliners." may be generated into a summarized sentence "Rockwell International Corp.'s Tulsa unit signed a tentative agreement with Boeing Co." In response to such a summarized sentence being generated, the processor 140 may control the display 120 to display the generated summarized sentence on the screen. By such a control command, the display 120 may display the summarized sentence related to the head sentence on the screen.

Meanwhile, according to an additional aspect of the present disclosure, the processor 140 may generate a summarized sentence using at least one sentence including a keyword related to a subjective semantic element pre-registered of among a plurality of sentences included in a theme paragraph pre-obtained from the main document and a pre-obtained summarized sentence, and display the generated summarized document on the screen through the display 120. Herein, the subjective semantic element is an element for indicating the intention of the writer who wrote the main document, and such a subjective semantic element may include a word indicating expressions relating to the writer's evaluation, sentiment, and opinions.

Therefore, the processor 140 may obtain a sentence including a keyword indicating expressions relating to the writer's evaluation, sentiment, and opinions within the theme paragraph pre-obtained in the main document with reference to the word defined as the subjective semantic element pre-stored in the storage 150. In response to such a sentence being obtained, the processor 140 may generate a summarized document using the pre-generated summarized sentence and the sentence indicating the writer's intentions. As such, the display apparatus according to the present disclosure may generate a summarized document that presents not only objective fact relations but also semantic tendencies where the writing intentions of the writer have been taken into account from the main document.

Meanwhile, according to an additional aspect of the present disclosure, the processor 140 may generate a summarized document according to a summarization level selected by the user.

More specifically, the storage 150 may store summarization level information predetermined regarding generation of the summarized document. Herein, the summarization level information may include a first summarization level for generating a head summarized document, a second summarization level for generating a general summarized document and a third summarization level for generating an expanded summarized document.

According to an embodiment, the head summarized document corresponding to the first summarization level may be a document generated by extracting a sentence including at least one head keyword of among the sentences in the main document, and then generated from a sentence having a highest reliability value based on the number of head keywords included in each of the extracted sentence. Furthermore, the general summarized document corresponding to the second summarization level may be a document generated based on the sentence included in the paragraph that is the main theme after figuring out characteristics of each paragraph through structure analysis of the main document. Furthermore, the expanded summarized document corresponding to the third summarization level may be a document generated based on the general summarized document generated regarding the second summarization level and based on the sentence where the writing intentions of the writer have been taken into account.

Therefore, in response to one of the first to third summarization levels being selected according to the user's command, the processor 140 may generate a summarized document corresponding to the summarization level selected by the user in the main document.

Hereinafter, an operation of generating a summarized document in the aforementioned display apparatus will be explained in further detail.

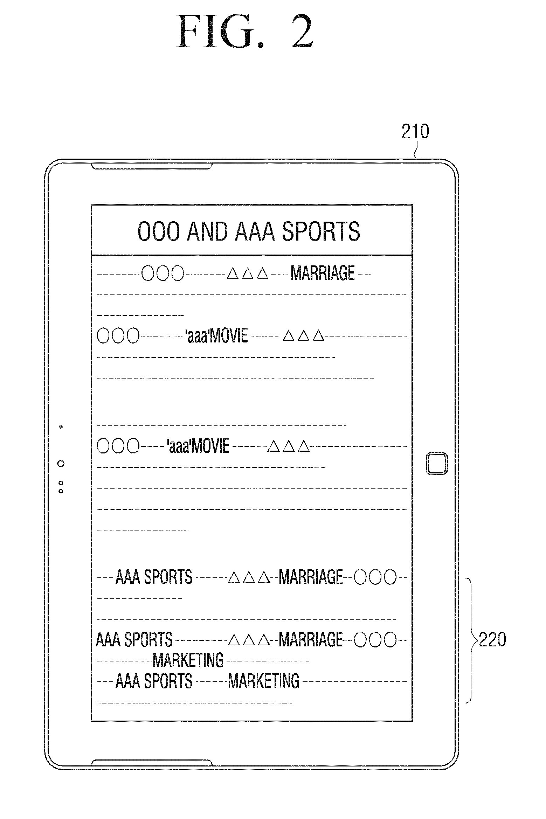

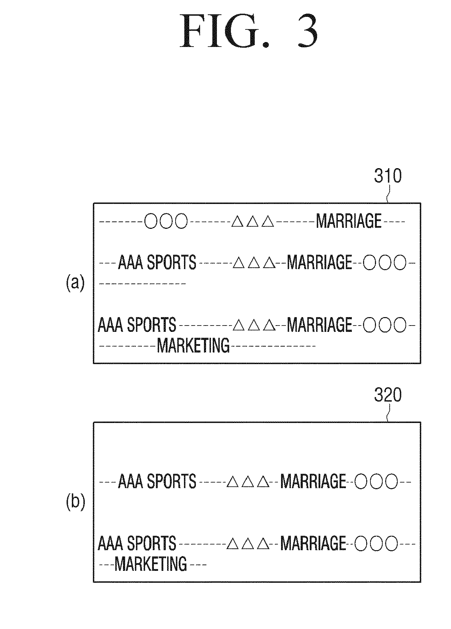

FIG. 2 is an exemplary view of a main document according to an embodiment of the present disclosure, and FIG. 3 is an exemplary view of generating a summarized sentence for generating a summarized document according to an embodiment of the present disclosure.

As illustrated in FIG. 2, on the screen of the display apparatus, a content related to the main document 210 of a text format received from the content server (not illustrated) may be displayed. In response to a command to generate a summarized document being input by the user with such a main document 210 displayed, the document analyzer 130 may analyze the main document 210 of the text format and extract a word per sentence in the main document 210, and extract a word that occurs for, or more than, a predetermined number of times as a keyword with a high frequency of occurrence. As illustrated, keywords such as "○○○", "ΔΔΔ", "marriage", "aaa", "movie", "AAA sports" and "marketing" may be extracted from the main document 210.

In response to such a plurality of keywords being extracted, the processor 140 may analyze the extracted keyword and determine the characteristics of the document. More specifically, as illustrated, keywords such as "○○○", "ΔΔΔ", "marriage", "aaa", "movie", "AAA sports" and "marketing" extracted from the main document 210 may be inappropriate as keywords regarding a document centered around an object such as a person, place and title of workpiece. Therefore, the processor 140 may determine to refer to a sub document in order to generate a summarized sentence regarding the main document. According to such a determination, the document analyzer 130 may analyze contents or document titles of a plurality of sub documents provided from the content server (not illustrated), and determine a sub document that includes at least one keyword of among a plurality of pre-extracted keywords as a document related to the main document.

In response to the sub document related to the main document being determined, the document analyzer 130 extracts a word per sentence on the determined sub document, and extracts a keyword that occurs for, or more than, a predetermined number of times as a keyword with a high frequency of occurrence. In response to such a keyword being extracted, the document analyzer 130 may determine a common keyword of among the keywords extracted from the main document and the keywords extracted from the sub document as the head keyword of the main document.

As aforementioned, keywords of "○○○", ΔΔΔ", "marriage", "aaa", "movie", "AAA sports" and "marketing" may be extracted from the main document 210, and of the keywords, the keywords regarding "○○○", ΔΔΔ", "marriage", "AAA sports" and "marketing" may be common keywords with the sub document. Therefore, the document analyzer 130 may determine "○○○", ΔΔΔ", "marriage", "AAA sports" that are common keywords with the sub document as the head keywords.

In response to such a plurality of head keywords being determined, the processor 140 extracts a sentence that includes at least one head keyword from each sentence. Then, after computing a reliability value from the distribution chart of head keywords per sentence is extracted, the processor 140 may compare the computed reliability value and a predetermined critical value, and extract a head sentence for generating a sentence having a reliability value of or more than a predetermined threshold value.

As illustrated in (a) of FIG. 3, for example, a first sentence of a first paragraph, a first sentence of a third paragraph, and a second sentence of a third paragraph may be extracted as a head sentence 310. As such, in response to a plurality of head sentences 310 being extracted from the main document 210, the processor 140 may obtain a theme paragraph that is a head theme in the main document 210 through discourse analysis. More specifically, the processor 140 may analyze a structure of the main document through discourse analysis, figure out a relationship between the first to third paragraphs and obtain a theme paragraph that is the head theme.

That is, the processor 140 may obtain a certain paragraph as a theme paragraph through a relationship between each paragraph. In response to the theme paragraph being obtained through discourse analysis, the processor 140 generates a head sentence that is included in the theme paragraph of among pre-extracted head sentences as a summarized sentence through syntax analysis.

Therefore, the processor 140 determines the first sentence of a first paragraph extracted as the head sentence 310, the first sentence of a third paragraph, and a first sentence and second sentence of the third paragraph as a head sentence for generating a summarized document. Then, the processor 140 summarizes the first sentence and second sentence of the third paragraph determined as a head sentence for generating a summarized document through syntax analysis.

Therefore, each of the first and second sentence of the third paragraph may be generated as a summarized sentence 320 of a format as illustrated in (b) of FIG. 3.

For example, the first sentence of the third paragraph may be "meanwhile, AAA sports selected ○○○ who married ΔΔΔ as a model in consideration of entering the Chinese market", and the second sentence of the third paragraph may be "AAA sports is aiming to achieve 150 billion won in annual sales in China due to ○○○ who married ΔΔΔ". Therefore, the processor 140 re-configures a word of a basic unit that forms the head sentence through syntax analysis regarding the first and second sentences of the third paragraph. Therefore, the processor 140 may generate a summarized sentence of "AAA sports is aiming to achieve 150 billion won in annual sales in China" from the first sentence of the third paragraph "meanwhile, AAA sports selected ○○○ who married ΔΔΔ as a model in consideration of entering the Chinese market" and the second sentence of the third paragraph "AAA sports is aiming to achieve 150 billion won in annual sales in China due to ○○○ who married ΔΔΔ".

Meanwhile, the processor 140 may generate a summarized document using a pre-obtained summarized sentence and at least one sentence that includes a keyword related to a pre-registered subjective semantic element of among the plurality of sentences included in the pre-obtained theme paragraph in the main document.

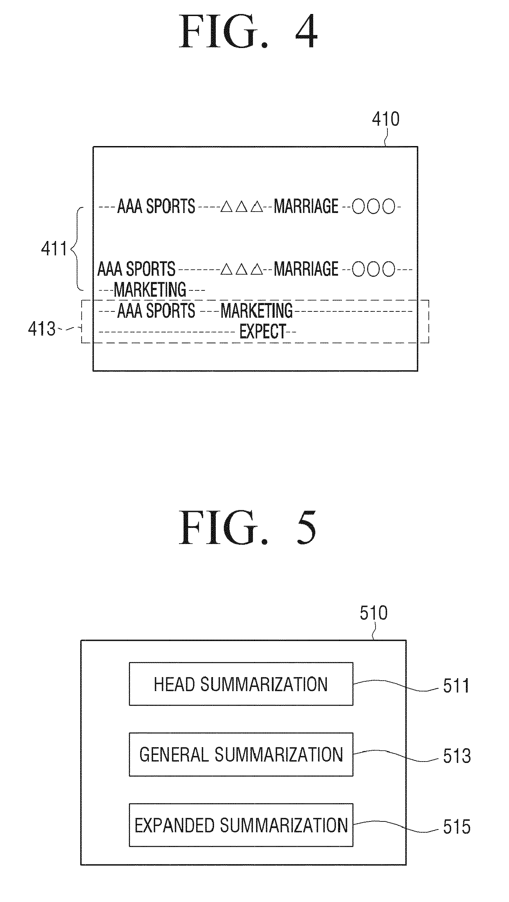

FIG. 4 is an exemplary view of generating a summarized document where a subjective meaning is included according to an embodiment of the present disclosure.

As explained with reference to (b) of FIG. 3, the processor 140 summarizes the first sentence and second sentence of the third paragraph determined as the head sentence for generating a summarized document through syntax analysis and generates a summarized sentence 320. Such a summarized sentence 320 may be a summarized document where a subjective meaning is included. In response to the summarized sentence 320 where the subjective meaning is included being generated, the processor 140 extracts a sentence that includes a keyword related to the pre-registered subjective semantic element of among a plurality of sentences included in the theme paragraph pre-obtained in the main document 210.

As aforementioned, a subjective semantic element is an element for indicating intentions of the writer who wrote the main document, and such a subjective semantic element may include a word indicating expressions related to an evaluation, sentiment and opinion of the writer. Therefore, the processor 140 may obtain a sentence including a keyword indicating expressions related to the evaluation, sentiment and opinion of the writer within the theme paragraph pre-obtained in the main document with reference to the word defined as a subjective semantic element pre-stored in the storage 15-.

For example, in a case where a last sentence in the third paragraph determined as the theme paragraph in the main document 210 includes a word "expected" and this word is classified as a subjective semantic element, the processor 140 determines the last sentence in the third paragraph determined as the theme paragraph as a sentence that includes a subjective meaning for indicating the intentions of the writer who wrote the main document 210. Therefore, the processor 140 may generate a summarized document 410 regarding the main document 210 using the summarized sentence 411 pre-generated with the first sentence and the second sentence of the third paragraph determined as the head sentence for generating a summarized document and the last sentence 413 of the third paragraph.

Hereinafter, an operation of generating a different summarized document according to a user's command in a display apparatus according to the present disclosure will be explained in further detail.

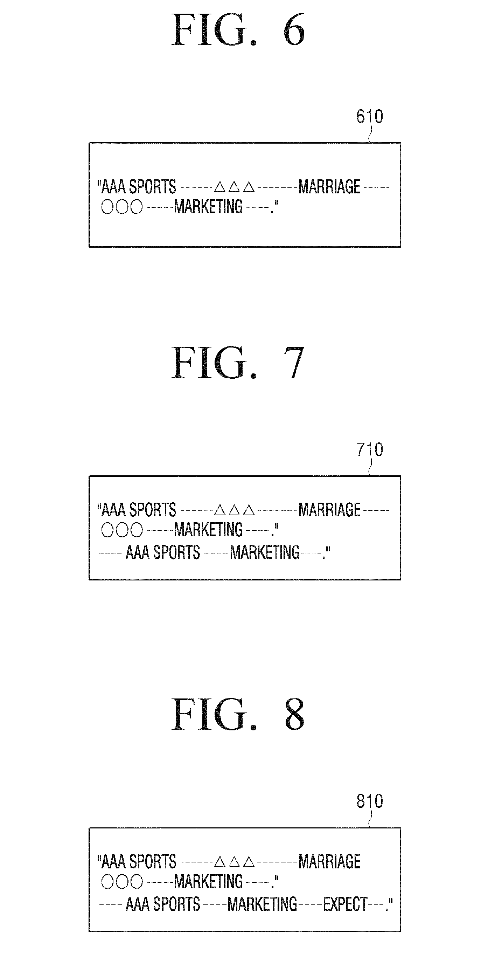

FIG. 5 is an exemplary view of providing a menu UI for generating a different summarized document in a display apparatus according to an embodiment of the present disclosure; FIG. 6 is an exemplary view of a head summarized document generated according to a first summarization level in a display apparatus according to an embodiment of the present disclosure; FIG. 7 is an exemplary view of a general summarized document generated according to a second summarization level in a display apparatus according to an embodiment of the present disclosure; and FIG. 8 is an exemplary view of an expanded summarized document generated according to a third summarization level in a display apparatus according to an embodiment of the present disclosure.

As illustrated in FIG. 5, in response to a setting command for generating a summarized document being input, the processor 140 controls a display 120 to display a menu UI for generating a summarized document corresponding to one of a first to third summarization level based on the summarization level information pre-stored in the storage 150. Accordingly, the display 120 may display a menu UI 510 for generating a summarized document of a different extent on the screen. That is, the display 120 may display a menu UI 510 that includes a head summary 511 corresponding to the first summarization level, a general summary 513 corresponding to the second summarization level, and an expanded summary 515 corresponding to the third summarization level on the menu UI 510.

Herein, the head summary 511 corresponding to the first summarization level may be a summarized document generated by extracting a sentence including at least one head keyword of the sentences in the main document and generating a sentence having the highest reliability value based on the number of head keywords included in each sentence extracted. Furthermore, the general summary 513 corresponding to the second summarization level may be a summarized document generated based on the sentence included in the paragraph that is the head theme as a result of figuring out characteristics of each paragraph through syntax analysis of the main document. Furthermore, the expanded summary 515 corresponding to the third summarization level may be a summarized document generated regarding the second summarization level and a summarized document generated based on the sentence where the writing intentions of the writer have been taken into account.

For example, in response to a command to select a head summary 511 being input with the head keywords "○○○", "ΔΔΔ", "marriage", and "AAA sports" having been determined from the main document 210 as illustrated in FIG. 2, the processor 140 generates a head summarized document based on a sentence where the pre-determined head keywords are distributed the most of among the sentences in the main document 210. Accordingly, as illustrated in FIG. 6, the display may display a head summarized document 610 "AAA sports --- ΔΔΔ --- marriage --- ○○○ --- marketing ---" on the screen.

Meanwhile, in response to a command to select a general summary 513 being input with head keywords "○○○", "ΔΔΔ", "marriage", and "AAA sports" having been determined from the main document 210, the processor 140 determines a paragraph that becomes the head theme through syntax analysis of among the paragraphs in the main document 210. For example, in response to the last paragraph being determined as the paragraph that is the theme, the processor 140 generates a general summarized document based on the sentence included in the paragraph determined as the theme paragraph. Accordingly, the display 120 may display a general summarized document 710 of "AAA sports--- ΔΔΔ --- marriage --- ○○○ --- marketing ---. --- AAA sports --- marketing ---" on the screen as illustrated in FIG. 7.

Meanwhile, in response to a command to select an expanded summary 515 being input with head keywords of "○○○", "ΔΔΔ", "marriage", "AAA sports" having been determined from the main document 210, the processor 140 generates a general summarized document based on the sentence included in the predetermined theme paragraph. Furthermore, the processor 140 extracts a sentence where the writing intentions of the writer have been taken into account of among the sentences included in the main document. Then, the processor 140 generates an expanded summarized document based on a pre-extracted sentence where the writing intentions of the writer have been taken into account and a pre-generated general summarized document. Accordingly, as illustrated in FIG. 8, the display 120 may display an expanded summarized document 810 of "AAA sports --- ΔΔΔ --- marriage --- ΔΔΔ ---marketing ---. --- AAA sports --- marketing --- expect---" on the screen. Hereinafter, a method for generating a summarized document regarding a main document in a display apparatus will be explained in detail.

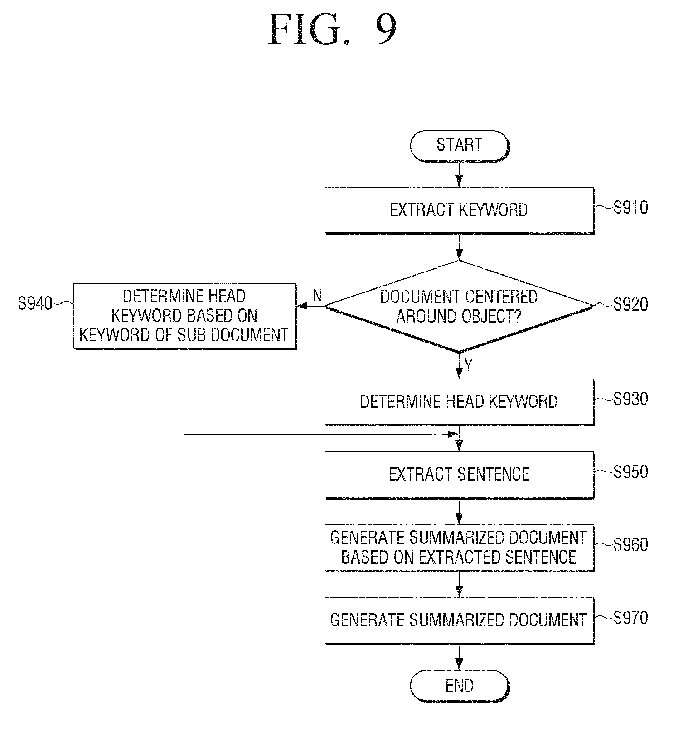

FIG. 9 is a flowchart of a method for generating a summarized document in a display apparatus according to an embodiment of the present disclosure.

As illustrated in FIG. 9, the display apparatus displays a document (hereinafter referred to as the main document) that the user requested from the content server (not illustrated). Herein, the main document may be a document of a text format. In response to a user command regarding a summarized document being input with the main document displayed, the display apparatus extracts a plurality of keywords with high frequencies of occurrence from the main document displayed on the screen (S910). More specifically, the display apparatus may extract a word for each sentence in the main document displayed on the screen, and extract a word that occurs for, or more than, a predetermined number of times as a keyword of high frequency of occurrence.

In response to such a plurality of keywords being extracted, the display apparatus determines document characteristics from the extracted keyword, and determines whether the main document is a document centered around an object such as a person, place, and title of workpiece, or a document centered around an event relationship (S920). However, the present disclosure is not limited thereto, and thus the display apparatus may analyze an extracted keyword and determine to refer to a sub document regarding the remaining documents with the document centered around the object excluded.

In response to having determined that the main document is a document centered around an object, the display apparatus determines the plurality of keywords extracted as having high frequencies of occurrence in the main document as head keywords (S930). Meanwhile, in response to having determined that the main document is not a document centered around an event relationship or not a document centered around an object, the display apparatus determines a head keyword from the plurality of pre-extracted keywords based on the keyword of the sub document related to the main document (S940). More specifically, in response to having determined that the main document is not a document or not a document centered around an object, the display apparatus may analyze contents of the plurality of sub documents that the content server provides, and determine a sub document that includes at least one keyword of among the plurality of pre-extracted keywords as a document related to the main document.

However, there is no limitation thereto, and thus the display apparatus may analyze a document title of the plurality of sub documents that the content server (not illustrated) provides and determine the sub document having a document title that includes at least one keyword of among the plurality of pre-extracted keywords as the document related to the main document. In response to the sub document related to the main document being determined, the display apparatus may determine a head keyword from the plurality of pre-extracted keywords based on the sub document determined as a document related to the main document.

In response to such a head keyword being determined through such an embodiment, the display apparatus determines a reliability for each sentence of the main document based on the head keyword, and extracts a sentence that matches a predetermined condition with reference to the determined reliability (S950). Herein, at least one sentence that matches the predetermined condition may be a head sentence for generating a summarized document. Such a head sentence for generating a summarized document may be extracted through the method that will be explained hereinafter.

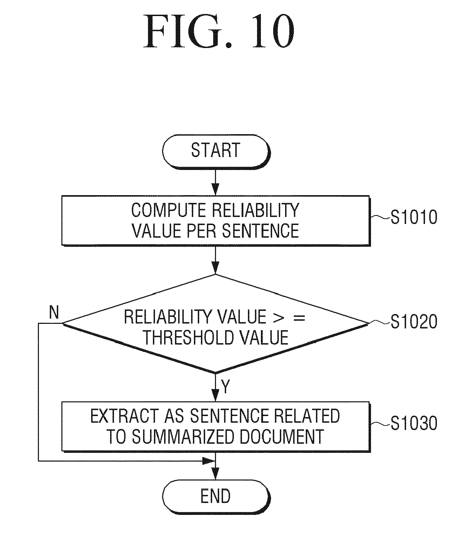

FIG. 10 is an exemplary view of extracting a head sentence for generating a summarized document in a display apparatus according to the present disclosure.

As illustrated in FIG. 10, in response to a head keyword being extracted from a plurality of keywords having high frequencies of occurrence in the main document through the aforementioned embodiment, the display apparatus extracts a sentence that includes at least one head keyword of among each sentence in the main document. Then, the display apparatus computes a reliability value from a distribution chart of head keywords per sentence extracted (S1010). Herein, the reliability value may be a value determined in proportionate to the number of head keywords included in each sentence. Then, the display apparatus may compare the reliability value computed per sentence with the predetermined threshold value, and extract a sentence having a reliability value of or more than the predetermined threshold value as a head sentence for generating a summarized document (S1020, S1030).

However, the present disclosure is not limited thereto, and in response to the sentence including a head keyword being extracted, the display apparatus may extract a sentence having head keywords of or more than the predetermined number of keywords as a head sentence for generating a summarized document.

Meanwhile, in response to there being a plurality of head sentences extracted, the display apparatus may obtain a theme paragraph that is the head theme in the main document through discourse analysis, and extract a sentence included in the theme paragraph of among the plurality of sentences extracted as a head sentence for generating a summarized sentence. In response to the head sentence for generating a summarized document being extracted through this method, the display apparatus analyzes a structural format of the extracted sentence, re-configures a word configuring the sentence and generates a summarized sentence (S960). In an embodiment, the display apparatus may generate the sentence extracted as the head sentence as a summarized sentence through syntax analysis. More specifically, in response to the head sentence for generating a summarizing document having been determined, the display apparatus may analyze a structural format of the head sentence through syntax analysis, re-configure a word of a basic unit that forms the head sentence and generate a summarized sentence.

In another embodiment, in response to the head sentence for generating a summarized document having been determined, the display apparatus analyzes the structural format of the head sentence through syntax analysis and extracts a word of a basic unit that forms the head sentence. Then, the display apparatus may analyze whether there is a relationship between the extracted words when disclosed, and generate a summarized sentence based on remaining words besides at least one word having a same meaning.

In response to a summarized sentence regarding the pre-extracted head sentence having been generated through such an embodiment, the display apparatus generates a summarized document using at least one sentence that includes a keyword related to a pre-registered subjective semantic element of among the plurality of sentences included in the theme paragraph pre-obtained in the main document and a pre-obtained summarized sentence (S970). Herein, the subjective semantic element is an element for indicating writing intentions of the writer who wrote the main document, and such a subjective semantic element may include a word indicating expressions related to an evaluation, sentiment and opinion of the writer. Therefore, the display apparatus may obtain a sentence that includes a keyword indicating expressions related to the evaluation, sentiment and opinion of the writer within the theme paragraph pre-obtained in the main document with reference to the word defined as the subjective semantic element. In response to obtaining such a sentence, the display apparatus generates a summarized document using a pre-generated summarized sentence and a sentence indicating the writing intentions of the writer.

As such, the display apparatus according to the present disclosure may generate a summarized document that presents not only an objective fact relation but also semantic tendency where the writing intentions of the writer have been taken into account from the main document.

Furthermore, the aforementioned method for summarizing a document may be realized as at least one execution program for executing the aforementioned document summarizing method, and such an execution program may be stored in a non-transitory computer readable media.

Herein, a non-transitory computer readable media refers to a computer readable media that stores data semi-permanently and not for a short period of time such as a register, cache and memory. Specifically, the aforementioned programs may be stored in various kind of non-transitory computer readable media a RAM(Random Access Memory), flash memory, ROM(Read Only Memory), EPROM(Erasable Programmable ROM), EEPROM(Electronically Erasable and Programmable ROM), register, hard disk, removable disk, memory card, USB memory, and CD-ROM.

The foregoing exemplary embodiments and advantages are merely exemplary and are not to be construed as limiting the embodiments. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display apparatus comprising:
a communicator configured to perform data communication with a content server and to receive at least one of a main document and a sub document related to the main document;
a document analyzer configured to extract a keyword having a high frequency of occurrence from the main document, and to determine a head keyword for generating a summarized document from the extracted keyword with reference to the received sub document; and
a processor configured to determine a reliability of each sentence of the main document based on the head keyword, extract a sentence that matches a predetermined condition with reference to the determined reliability, and analyze a structural format of the extracted sentence so as to re-configure a word that forms the sentence and generate a summarized sentence.

2. The display apparatus according to claim 1,
wherein the processor is arranged to compute a reliability value from a distribution chart of the head keyword of each sentence of the main document, to compare the computed reliability value with a predetermined threshold value, and to extract a sentence having a reliability value of or above the predetermined threshold value as a sentence for generating a summarized sentence.

3. The display apparatus according to claim 2,
wherein, in response to there being a plurality of extracted sentences, the processor is arranged to obtain a theme paragraph that is a head theme in the main document through discourse analysis, and to extract a sentence included in the obtained theme paragraph of among the plurality of extracted sentences as a sentence for generating a summarized sentence.

4. The display apparatus according to claim 3,
wherein the processor is arranged to analyze a structure of the extracted sentence through syntax analysis, to extract a word forming a head sentence of among a plurality of words forming the sentence, and to generate a summarized sentence based on the extracted word.

5. The display apparatus according to claim 4,
wherein the processor is arranged to analyze a disclosed relationship between the extracted words and to generate a summarized sentence based on remaining words excluding at least one word having a same meaning.

6. The display apparatus according to any one of claims 3 to 5,
further comprising a display configured to display the summarized sentence; and wherein the processor is arranged to generate a summarized document using at least one sentence including a keyword related to a pre-registered subjective semantic element of among a plurality of sentences included in the obtained theme paragraph and the summarized sentence, and to display the generated summarized document through the display, and
the subjective semantic element is an element related at least one of an evaluation, sentiment and opinion of a user regarding the main document.

7. The display apparatus according to any one of claims 1 to 6,
wherein, in response to the main document being a document oriented around an object, the document analyzer is arranged to determine the keyword extracted from the main document as a head keyword, and in response to the main document being a document centered around an event relationship, the document analyzer is arranged to determine a head keyword with reference to the sub document.

8. The display apparatus according to claim 7,
wherein, in response to the main document being a document centered around an event relationship, the document analyzer is arranged to analyze a title of each of a plurality of sub documents and to determine a head keyword with reference to a sub document having a title of a document including the extracted keyword.

9. A method for summarizing a document in a display apparatus, the method comprising:
extracting a keyword having a high frequency of occurrence from a main document;
determining a head keyword for generating a summarized sentence from the extracted keyword with reference to at least one sub document;
determining a reliability of each sentence of the main document based on the head keyword, and extracting a sentence matching a predetermined condition with reference to the determined reliability; and
analyzing a structural format of the extracted sentence, re-configuring a word that forms the sentence, and generating a summarized sentence.

10. The method according to claim 9,
wherein the extracting involves computing a reliability value from a distribution chart of the head keyword of each sentence of the main document, comparing the computed reliability value and a predetermined threshold value, and extracting a sentence having a reliability value of or above the predetermined threshold value as a sentence for generating a summarized sentence.

11. The method according to claim 10,
wherein the extracting a sentence for generating a summarized sentence involves, in response to there being a plurality of extracted sentences, obtaining a theme paragraph that is a head theme in the main document through discourse analysis, and extracting a sentence included in the obtained theme paragraph of among the plurality of extracted sentences as a sentence for generating a summarized sentence.

12. The method according to claim 11,
wherein the generating a summarized sentence involves analyzing a structural format of the extracted sentence through syntax analysis, extracting a word forming a head sentence of among a plurality of words forming the sentence, and generating a summarized sentence based on the extracted word.

13. The method according to claim 12,
wherein the generating a summarized sentence involves analyzing a disclosed relationship between the extracted words and generating a summarized sentence based on remaining words excluding at least one word having a same meaning.

14. The method according to any one of claims 11 to 13,
wherein the generating a summarized document further comprises generating a summarized document using at least one sentence including a keyword related to a pre-registered subjective semantic element of among a plurality of sentences included in the obtained theme paragraph and the summarized sentence, and
the subjective semantic element is an element related to at least one of an evaluation, sentiment and opinion of a user regarding the main document.

15. The method according to any one of claims 9 to 14,
further comprising analyzing the extracted keyword and determining document characteristics,
wherein the determining a head keyword involves, in response to the main document being a document centered around an object, determining a keyword extracted on the main document as a head keyword, and in response to the main document being a document centered around an event relationship, determining a head keyword with reference to the sub document.
